# EUROPEAN PATENT APPLICATION

(11) **EP 4 012 203 A1**
(43) Date of publication of application: **15.06.2022**
(21) Application number: 21205762.4
(22) Date of filing: 01.11.2021
(51) Int. Cl.: F16B 37/04, F16B 5/06, F16B 2/08

(54) **LOCKING ASSEMBLY AND TOILET**

(30) Priority: 08.12.2020 CN 202011424998
(71) Applicant: Xiamen Beewill Sanitary Co., Ltd., Xiamen, Fujian 361022 (CN)
(72) Inventor: Ren, Shisong, Xiamen, 361022 (CN); Cai, Liangquan, Xiamen, 361022 (CN); Lv, Yonglong, Xiamen, 361022 (CN)
(74) Representative: Ipey

(57) **Abstract**

The present invention discloses a locking assembly, including a flexible connecting piece and a fixing sheet; one end of the flexible connecting piece is connected to the fixing sheet, the flexible connecting piece and the fixing sheet are linked, and the flexible connecting piece is provided with a limiting structure for preventing a movement of the fixing sheet. The present invention further discloses a toilet, including the locking component, which can quickly fix the fixing sheet to facilitate the installation of a support and realize the rapid disassembly and replacement of a cover plate. By applying a force to the flexible connecting piece, the fixing sheet can be driven to move, so that the fixing sheet abuts against a load-bearing component, for example, abutting against one side of a toilet body, and meanwhile, the fixing sheet is prevented by the limiting structure from moving. Therefore, the fixing sheet can be quickly fixed for easy installation.

## Description

### TECHNICAL FIELD

The present invention relates to the technical field of fixing devices, and in particular to a locking assembly and a toilet.

### BACKGROUND

During an installation of the cover plate of a toilet, a locking assembly is required to install the cover plate on a toilet body. Existing locking assemblies are generally a combination of an expansion bolt and a screw. When installing the cover plate, an expansion bolt made of plastic or rubber is firstly inserted into a reserved hole of the toilet body. Then, the screw passes through a mounting support and is connected to the expansion bolt to fix the mounting support of the cover plate. Finally, the rotating shaft of the cover plate is connected to the mounting support to complete a rotatable installation of the cover plate. Specifically, the expansion bolt is typically a plastic part or a rubber part, which may undergo creep deformation and become loose after a long-term use, and even be prone to damage under a rough installation.

In order to solve the above problems, some of the existing locking assemblies are made into metal locking assemblies. However, the metal locking assemblies cannot achieve the function of quick installation or quick disassembly, and an improper installation thereof can easily cause damage. Meanwhile, since it is difficult to disassemble such metal locking assemblies without violence, the disassembly is also likely to cause damage.

### SUMMARY

The present invention aims to solve one of the technical problems described above at least to a certain extent. To this end, an objective of the present invention is to provide a locking assembly, which can quickly fix a fixing sheet for easy installation.

The second objective of the present invention is to provide a toilet, including a locking assembly, which can quickly fix a fixing sheet to facilitate the installation of a support and realize the rapid disassembly and replacement of a cover plate.

In order to achieve the above objectives, an embodiment of the first aspect of the present invention provides a locking assembly, including a flexible connecting piece and a fixing sheet;

One end of the flexible connecting piece is connected to the fixing sheet, the flexible connecting piece and the fixing sheet are linked, and the flexible connecting piece is provided with a limiting structure for preventing a movement of the fixing sheet.

According to the locking assembly of the embodiment of the present invention, by applying a force to the flexible connecting piece, the fixing sheet can be driven to move, so that the fixing sheet abuts against a load-bearing component, for example, abutting against one side of a toilet body, and meanwhile, the fixing sheet is prevented by the limiting structure from moving. Therefore, the fixing sheet can be quickly fixed for easy installation.

Further, the locking assembly also includes a plug; the other end of the flexible connecting piece passes through the plug, and drives the fixing sheet to get close to the plug. The plug or both the flexible connecting piece and the plug are provided with the limiting structure for preventing the fixing sheet from moving away from the plug.

Further, a limiting bar is arranged on the plug, one end of the limiting bar is elastically connected to one side wall of the plug, and the limiting bar and another side wall of the plug form a limiting channel for the flexible connecting piece to be inserted. The limiting bar is provided with a plurality of first one-way teeth, and each of the first one-way teeth includes a first sliding surface and a first abutting surface. The flexible connecting piece is provided with a plurality of second one-way teeth, each of the second one-way teeth includes a second sliding surface and a second abutting surface, and the second sliding surface can slide along the first sliding surface. When the second sliding surface slides along the first sliding surface and arrives at an end portion of the first sliding surface, the second sliding surface generates a sudden jump, so that the second abutting surface abuts on the first abutting surface. The limiting structure is a combination of the first one-way teeth and the second one-way teeth.

Further, the other end of the limiting bar protrudes out of the plug to form a pressing part, and the pressing part is pressed to change a width of the limiting channel.

Further, a through hole is arranged on the fixing sheet; one end of the flexible connecting piece is provided with a limiting block, and the other end of the flexible connecting piece passes through the through hole on the fixing sheet, so that the limiting block abuts against the fixing sheet.

Further, two or more flexible connecting pieces are provided.

Further, the limiting structure is a limiting ball, and the limiting ball is arranged at the end of the flexible connecting piece away from the fixing sheet. Alternatively, the limiting structure is a foldable metallic flexible connecting piece.

Further, the limiting structure is an elastic sheet, one end of the elastic sheet is elastically connected to a side wall of the plug, the other end of the elastic sheet and another side wall of the plug form an opening for the flexible connecting piece to be inserted, and a width of the opening is less than a width of the flexible connecting piece.

Further, the locking assembly also includes a fastener, and the fastener is connected to the fixing sheet after passing through the plug.

In order to achieve the above objectives, an embodiment of the second aspect of the present invention provides a toilet, including the locking assembly described above, a support, and a cover plate. The support is installed on a toilet body by the locking assembly, and the cover plate is installed on the support.

According to the toilet of the embodiment of the present invention, the support is installed on the toilet body by the locking component, and the cover plate is installed on the support. Specifically, by applying a force to the flexible connecting piece, the fixing sheet can be driven to move to get close to the plug, so that the fixing sheet abuts against one side of the toilet body, and meanwhile, the fixing sheet is prevented by the limiting structure from moving away from the plug. Therefore, the fixing sheet can be quickly fixed for easy installation.

### BRIEF DESCRIPTION OF THE DRAWINGS

FIG. 1 is a structural schematic diagram of the locking assembly of Embodiment 1;
FIG. 2 is a structural schematic diagram of the locking assembly of Embodiment 2;
FIG. 3 is an exploded view of the locking assembly of Embodiment 3;
FIG. 4 is a structural schematic diagram of the limiting structure of Embodiment 3;
FIG. 5 is a schematic diagram showing a connection between the flexible connecting piece and the fixing sheet of Embodiment 3;
FIG. 6 is a schematic diagram showing another connection between the flexible connecting piece and the fixing sheet of Embodiment 3;
FIG. 7 is a structural schematic diagram of the locking assembly of Embodiment 4;
FIG. 8 is a structural schematic diagram of the locking assembly of Embodiment 5;
FIG. 9 is a structural schematic diagram of the toilet of Embodiment 7;
FIG. 10 is a structural schematic diagram showing the fixing sheet passing through the mounting hole in Embodiment 7;
FIG. 11 is a structural schematic diagram showing the plug placed on a side of the toilet in Embodiment 7;
FIG. 12 is a structural schematic diagram of fixing the support in Embodiment 7;
FIG. 13 is a structural schematic diagram of the support of Embodiment 7 in a locked state; and
FIG. 14 is a structural schematic diagram of the locking assembly of Embodiment 7 in a reset and removal state.

**Illustration of reference numerals**

| | | | |
|---|---|---|---|
| Locking assembly | 10 | Flexible connecting piece | 1 |
| Limiting block | 11 | Fixing sheet | 2 |
| Through hole | 21 | Threaded hole | 22 |
| Limiting structure | 3 | Limiting bar | 31 |
| First one-waytooth | 311 | First slidingsurface | 3111 |
| First abuttingsurface | 3112 | Pressing part | 312 |
| Limiting channel | 32 | Second one-way tooth | 33 |
| Second sliding surface | 331 | Plug | 4 |
| Fastener | 5 | Toilet body | 20 |
| Mounting hole | 201 | Support | 30 |
| Cover plate | 40. | | |

### DETAILED DESCRIPTION OF THE EMBODIMENTS

The embodiments of the present invention are described in detail below. The embodiments are exemplarily shown in the accompanying drawings, in which the same or similar reference numerals indicate the same or similar elements or elements with the same or similar function. The embodiments described below with reference to the accompanying drawings are exemplary and intended to explain the present invention instead of limiting the present invention.

### Embodiment 1

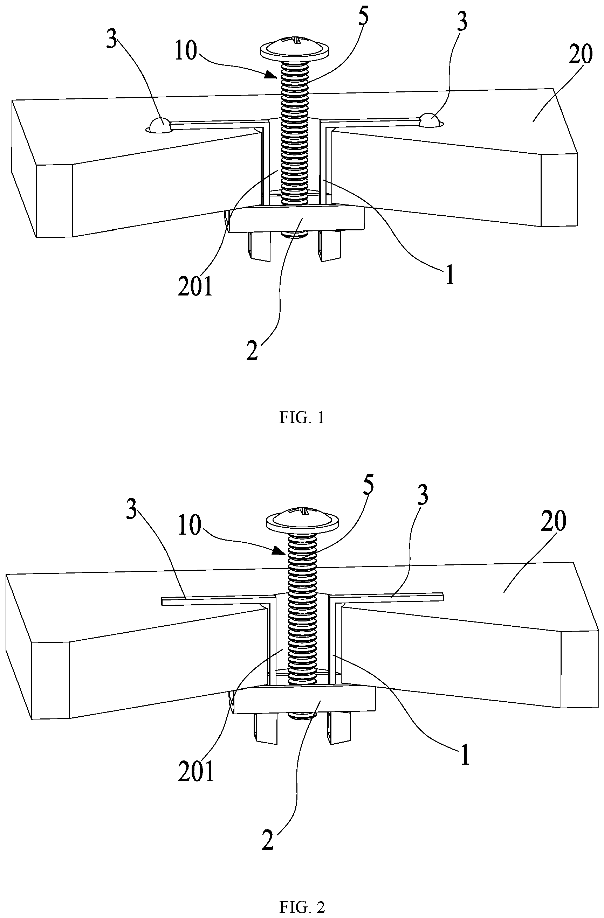

As shown in FIG. 1, Embodiment 1 of the present invention discloses a locking assembly 10, including the flexible connecting piece 1 and the fixing sheet 2. One end of the flexible connecting piece 1 is connected to the fixing sheet 2, and the flexible connecting piece 1 and the fixing sheet 2 are linked. The flexible connecting piece 1 is provided with the limiting structure 3 for preventing the fixing sheet 2 from moving. By applying a force to the flexible connecting piece 1, the fixing sheet 2 can be driven to move, so that the fixing sheet 2 abuts against a load-bearing component, for example, abutting against one side of the toilet body 20, and meanwhile, the fixing sheet 2 is prevented by the limiting structure 3 from moving. Therefore, the locking assembly can quickly fix the fixing sheet 2 for easy installation.

It should be illustrated that the load-bearing component is not limited to the toilet body 20, but may also be other components, such as a mounting plate of a table. The following embodiments all take the toilet body 20 as an example.

In the present embodiment, the limiting structure 3 is a limiting ball, and the limiting ball is arranged at the end of the flexible connecting piece 1 away from the fixing sheet 2. The load-bearing component, such as the toilet body 20, may be provided with a limiting hole. When the fixing sheet 2 is fixed on one side of the toilet body 20, the fixing sheet 2 obliquely passes through the mounting hole 201 of the toilet body 20 and then back to horizontal. Since one end of the flexible connecting piece 1 is connected to the fixing sheet 2, the flexible connecting piece 1 and the fixing sheet 2 are linked. The end of the flexible connecting piece 1 away from the fixing sheet 2 is provided with the limiting ball, and after the limiting ball on the flexible connecting piece 1 is engaged into the limiting hole, the fixing sheet 2 is prevented from moving, thus restricting the fixing sheet 2.

### Embodiment 2

As shown in FIG. 2, Embodiment 2 of the present invention discloses the locking assembly 10, including the flexible connecting piece 1 and the fixing sheet 2. One end of the flexible connecting piece 1 is connected to the fixing sheet 2, and the flexible connecting piece 1 and the fixing sheet 2 are linked. The flexible connecting piece 1 is provided with the limiting structure 3 for preventing the fixing sheet 2 from moving. By applying a force to the flexible connecting piece 1, the fixing sheet 2 can be driven to move, so that the fixing sheet 2 abuts against a load-bearing component, for example, abutting against one side of the toilet body 20, and meanwhile, the fixing sheet 2 is prevented by the limiting structure 3 from moving. Therefore, the locking assembly can quickly fix the fixing sheet 2 for easy installation.

In the present embodiment, the limiting structure 3 is a foldable portion of the foldable metallic flexible connecting piece 1. When the fixing sheet 2 is fixed on one side of the toilet body 20, the fixing sheet 2 obliquely passes through the mounting hole 201 of the toilet body 20 and then back to horizontal. Subsequently, the flexible connecting piece is folded by, for example, 90 degrees, which enables the flexible connecting piece 1 with folded rear end to abut against the toilet body 20 to prevent the fixing sheet 2 from moving, thus restricting the fixing sheet 2. Specifically, the toilet body 20 may be provided with a limiting slot, and the flexible connecting piece 1 with folded rear end is placed in the limiting slot to prevent shaking and improve stability.

Specifically, the foldable metallic flexible connecting piece 1 is preferably made of aluminum or tinplate. The flexible connecting piece 1 made of aluminum or tinplate has a certain hardness and can be bent under the action of an external force to realize a limit.

### Embodiment 3

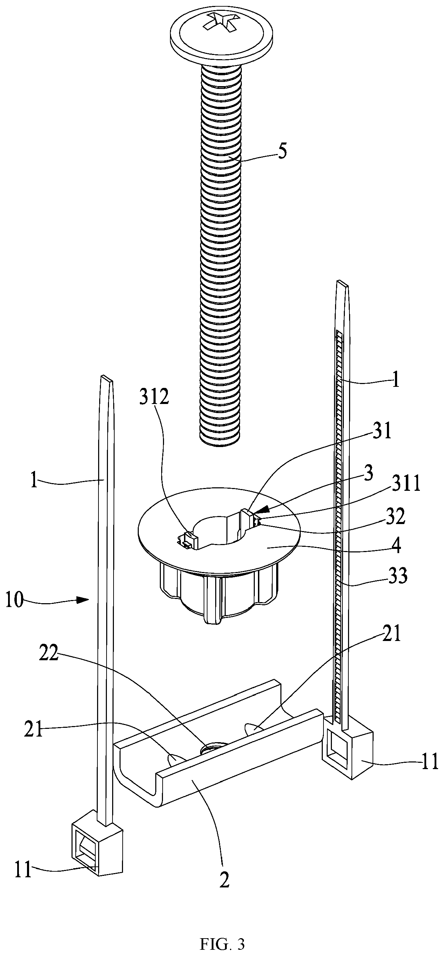

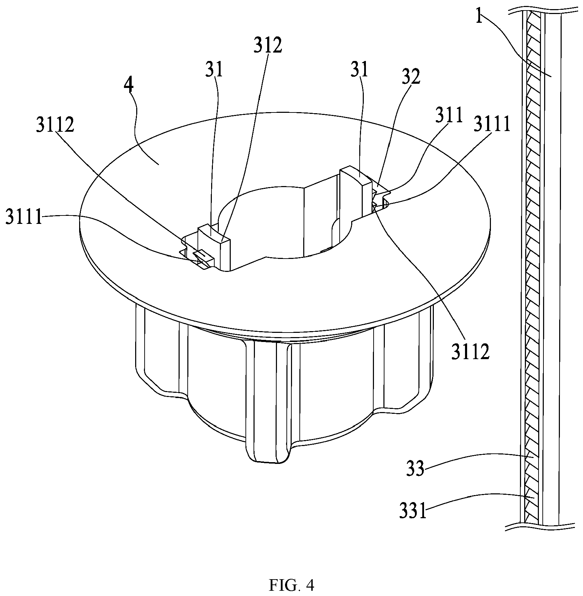

As shown in FIG. 3 to FIG. 6, Embodiment 3 of the present invention discloses the locking assembly 10, including the flexible connecting piece 1, the fixing sheet 2 and the plug 4. One end of the flexible connecting piece 1 is connected to the fixing sheet 2, and the other end of the flexible connecting piece 1 passes through the plug 4. The flexible connecting piece 1 and the fixing sheet 2 are linked, and thus, the fixing sheet 2 can be driven to get close to the plug 4. The plug 4 or both the flexible connecting piece 1 and the plug 4 are provided with the limiting structure 3 to prevent the fixing sheet 2 from moving away from the plug 4. By applying a force to the flexible connecting piece 1, the fixing sheet 2 can be driven to get close to the plug 4, so that the fixing sheet 2 abuts against a load-bearing component, for example, abutting against one side of the toilet body 20, and meanwhile, the fixing sheet 2 is prevented by the limiting structure 3 from moving away from the plug 4. Therefore, the locking assembly can quickly fix the fixing sheet 2 for easy installation.

When fixing the fixing sheet 2 on one side of the toilet body 20, the fixing sheet 2 passes through the toilet body 20 and then pulls the flexible connecting piece 1, and thus, the flexible connecting piece 1 drives the fixing sheet 2 to move close to the plug 4. When the fixing sheet 2 is located on one side of the toilet body 20, the limiting structure 3 prevents the fixing sheet 2 from moving away from the plug 4. Therefore, the fixing sheet 2 can be quickly fixed to facilitate the installation of the support 30.

In the present embodiment, the limiting bar 31 is arranged on the plug 4, one end of the limiting bar 31 is elastically connected to a side wall of the plug 4, and the limiting bar 31 and another side wall of the plug 4 form the limiting channel 32 for the flexible connecting piece 1 to be inserted. The limiting bar 31 is provided with a plurality of first one-way teeth 311, and each of the first one-way teeth 311 includes the first sliding surface 3111 and the first abutting surface 3112. The flexible connecting piece 1 is provided with a plurality of second one-way teeth 33, each of the second one-way teeth 33 includes the second sliding surface 331 and a second abutting surface, and the second sliding surface 331 can slide along the first sliding surface 3111. When the second sliding surface 331 slides along the first sliding surface 3111 and arrives at an end portion of the first sliding surface 3111, the second sliding surface 331 generates a sudden jump, so that the second abutting surface abuts on the first abutting surface 3112.

In other words, the limiting structure 3 is formed by mutual engagement of the plurality of first one-way teeth 311 arranged on the limiting bar 31 and the plurality of second one-way teeth 33 arranged on the flexible connecting piece 1. When the flexible connecting piece 1 is pulled, the second sliding surface 331 of one second one-way tooth 33 of the flexible connecting piece 1 is driven to slide along the first sliding surface 3111 of one first one-way tooth 311. After the second sliding surface 331 arrives at the end portion of the first sliding surface 3111 by sliding along the first sliding surface 3111, the second sliding surface 331 generates a sudden jump, then the flexible connecting piece 1 can be pulled continuously to make the second sliding surface 331 of the next second one-way tooth 33 slide along the first sliding surface 3111 of the next first one-way tooth 311, thereby enabling the fixing sheet 2 to move to and tightly abuts against one side of the toilet body 20 to facilitate the installation of the support 30.

In order to facilitate the fabrication of the flexible connecting piece 1 and the plug 4 and reduce the production cost, the first abutting surface 3112 and the second abutting surface are preferably horizontal surfaces. Of course, they can also be inclined surfaces that can achieve the same effect, which are not limited herein.

In the present embodiment, in order to realize disassembly, the other end of the limiting bar 31 protrudes out of the plug 4 to form the pressing part 312, and pressing the pressing part 312 can change the width of the limiting channel 32. That is, after the pressing part 312 is pressed, the limiting channel 32 can be driven to become wider, so that the second abutting surface is separated from the first abutting surface 3112 to complete the disassembly.

In addition, in the present embodiment, two or more flexible connecting pieces 1 are provided. With such arrangement, after one of the flexible connecting pieces 1 is separated from the limiting channel 32, the fixing sheet 2 may be in an inclined state, and then the fixing sheet 2 can be extracted out by pulling another flexible connecting piece 1, thus realizing repeated use and reducing cost.

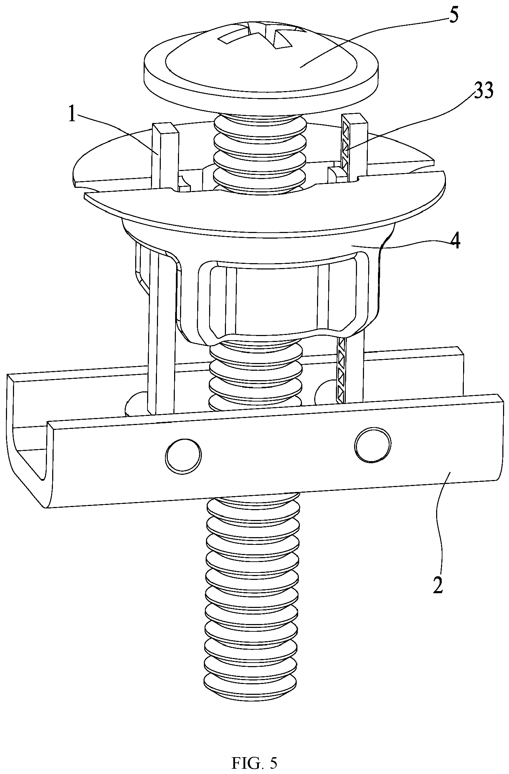

In the present embodiment, the fixing sheet 2 and the flexible connecting piece 1 can be connected in many manners. As shown in FIG. 3, the fixing sheet 2 can be provided with the through hole 21; one end of the flexible connecting piece 1 can be provided with the limiting block 11, and the other end of the flexible connecting piece 1 passes through the through hole 21 on the fixing sheet 2, making the limiting block 11 abut on the fixing sheet 2. In other words, the fixing sheet 2 and the flexible connecting piece 1 are separate elements which facilitate separate fabrication and can be detachably connected using the limiting block 11. In addition, as shown in FIG. 5, one end of the flexible connecting piece 1 can be provided with a hinge rod, a side of the fixing sheet 2 can be provided with a hinge hole, and the hinge rod is placed in the hinge hole to realize a connection between the flexible connecting piece 1 and the fixing sheet 2.

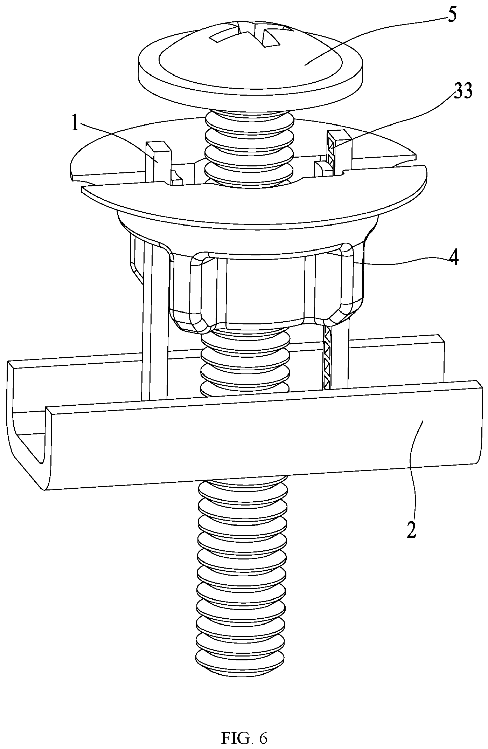

Of course, the fixing sheet 2 and the flexible connecting piece 1 in the present embodiment can also be integrally connected. As shown in FIG. 6, the flexible connecting piece 1 is integrally formed with a bottom plate of the fixing sheet 2, as such, only one mold is needed for fabrication.

### Embodiment 4

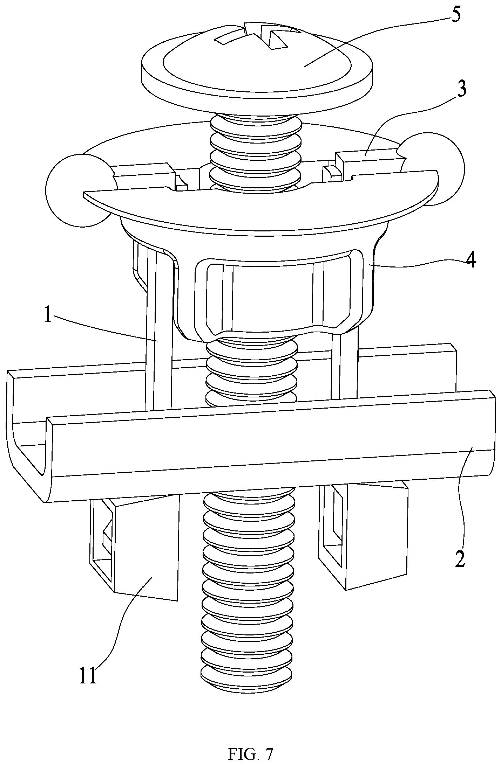

As shown in FIG. 7, Embodiment 4 of the present invention discloses the locking assembly 10. The difference between Embodiment 4 and Embodiment 3 of the present invention is that the limiting structure 3 is a limiting ball, and the limiting ball is arranged on the end of the flexible connecting piece 1 away from the fixing sheet 2. Specifically, the plug 4 can be provided with a limiting hole. When the fixing sheet 2 is fixed on one side of the toilet body 20, the fixing sheet 2 obliquely passes through the mounting hole 201 of the toilet body 20 and then back to horizontal. Since one end of the flexible connecting piece 1 is connected to the fixing sheet 2, the flexible connecting piece 1 and the fixing sheet 2 are linked. The end of the flexible connecting piece 1 away from the fixing sheet 2 is provided with the limiting ball, and after the limiting ball on the flexible connecting piece 1 is engaged into the limiting hole of the plug 4, the fixing sheet 2 is prevented from moving, thus restricting the fixing sheet 2.

### Embodiment 5

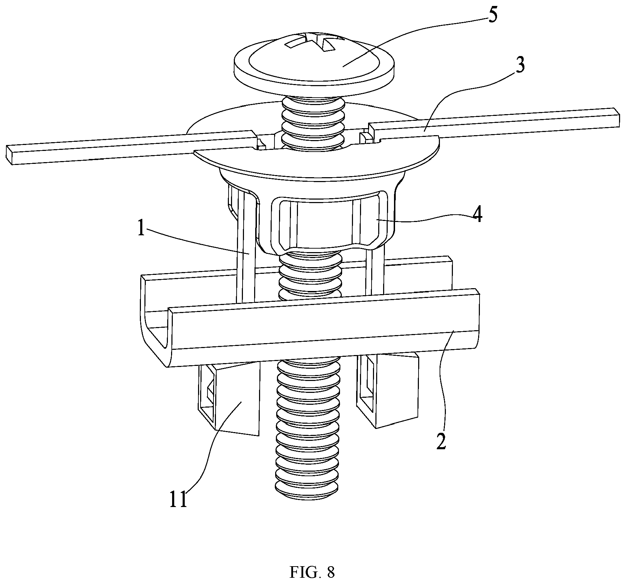

As shown in FIG. 8, Embodiment 5 of the present invention discloses the locking assembly 10. The difference between Embodiment 5 and Embodiment 3 of the present invention is that the limiting structure 3 is the foldable metallic flexible connecting piece 1. One end of the flexible connecting piece 1 is connected to the fixing sheet 2, and the other end of the flexible connecting piece 1 passes through the plug 4. When the fixing sheet 2 is fixed on one side of the toilet body 20, the fixing sheet 2 obliquely passes through the mounting hole 201 of the toilet body 20 and then back to horizontal. Subsequently, the flexible connecting piece is folded by, for example, 90 degrees, which enables the flexible connecting piece 1 with folded rear end to abut against the toilet body 20 to prevent the fixing sheet 2 from moving, thus restricting the fixing sheet 2. Specifically, the plug 4 can be provided with a limiting slot, and the flexible connecting piece 1 with folded rear end is placed in the limiting slot of the plug 4 to prevent shaking and improve stability.

### Embodiment 6

In the locking assembly 10 disclosed in Embodiment 6 of the present invention, the limiting structure 3 may be an elastic sheet. One end of the elastic sheet is elastically connected to a side wall of the plug 4, and the other end of the elastic sheet and another side wall of the plug 4 form an opening for the flexible connecting piece 1 to be inserted. The width of the opening is less than the width of the flexible connecting piece 1. That is, by setting the opening having a width smaller than that of the flexible connecting piece 1, after the flexible connecting piece 1 is inserted, the elastic sheet provides an elastic force to drive the flexible connecting piece 1 to tightly abut against the side wall of the plug 4.

It should be noted that, in the present embodiment, when the flexible connecting piece 1 is moved and inserted into the opening, the opening is driven to be enlarged due to the elastic connection between the end of the elastic sheet and the side wall of the plug 4, thus facilitating the insertion. Then, when the flexible connecting piece 1 stops moving, the elastic sheet provides an elastic force to drive the flexible connecting piece 1 to abut against the side wall of the plug 4, thereby achieving a limiting effect.

In some embodiments, the locking assembly 10 may further include the fastener 5. The fastener 5 passes through the plug 4 and is connected to the fixing sheet 2, and the fastener 5 may pass through the support 30 to facilitate the fixation of the support 30. Specifically, the fastener 5 is preferably a fastening screw, correspondingly, the threaded hole 22 may be provided on the fixing sheet 2, and the fastening screw and the threaded hole 22 are in a threaded connection.

### Embodiment 7

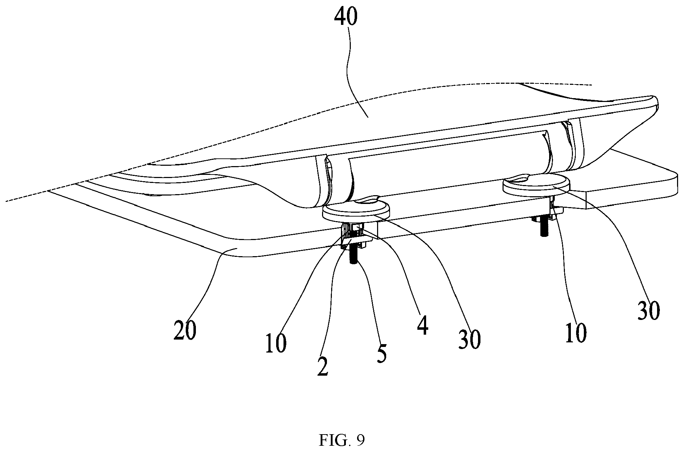

As shown in FIG. 9 to FIG. 14, Embodiment 7 of the present invention discloses a toilet, including the toilet body 20, the above-mentioned locking assembly 10, the support 30, and the cover plate 40. The toilet body 20 is provided with the mounting hole 201. The fixing sheet 2 obliquely passes through the mounting hole 201, the plug 4 is placed on the mounting hole 201, and the flexible connecting piece 1 and the fixing sheet 2 are linked to drive the fixing sheet 2 to get close to the plug 4, so that the fixing sheet 2 abuts against one side of the toilet body 20. The limiting structure 3 prevents the fixing sheet 2 from detaching from the toilet body 20. The fastener 5 is connected to the fixing sheet 2 after successively passing through the support 30 and the plug 4, and fixes the support 30 on the other side of the toilet body 20. The cover plate 40 is connected to the support 30.

The support 30 is installed on the toilet body by the locking assembly 10, and the cover plate 40 is installed on the support 30. Specifically, by applying a force to the flexible connecting piece 1, the fixing sheet 2 can be driven to get close to the plug 4, so that the fixing sheet 2 abuts against one side of the toilet body 20, and meanwhile, the fixing sheet 2 is prevented by the limiting structure 3 from moving away from the plug 4. Therefore, the fixing sheet 2 can be quickly fixed for easy installation.

Operating steps of fixing the support 30 by the locking assembly 10 of the present invention are as follows.

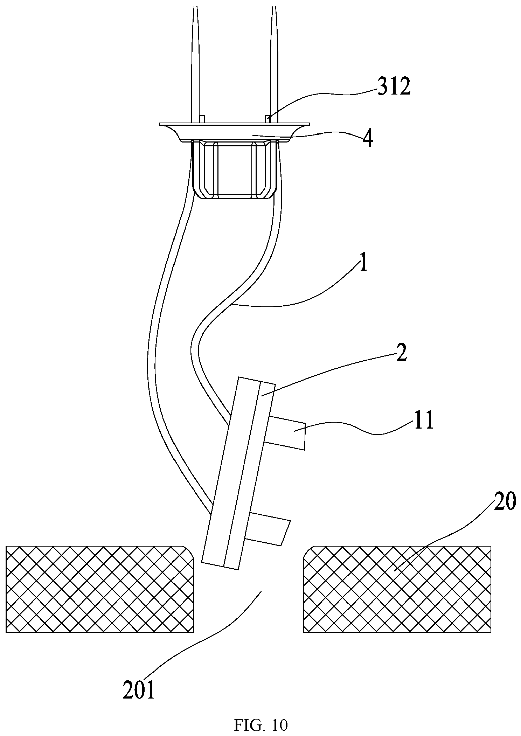

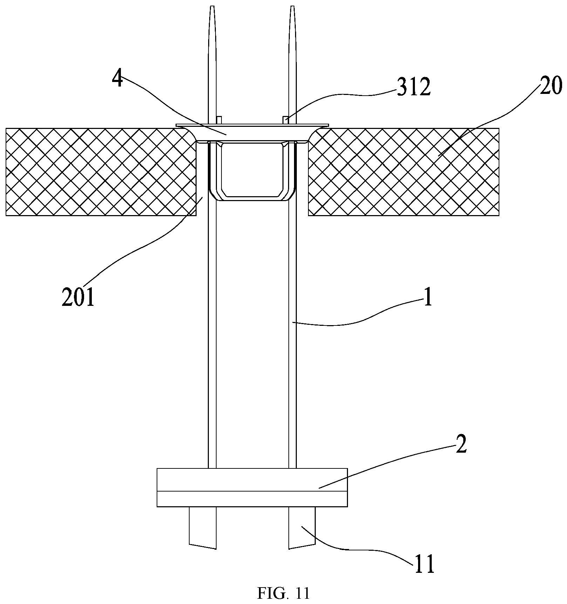

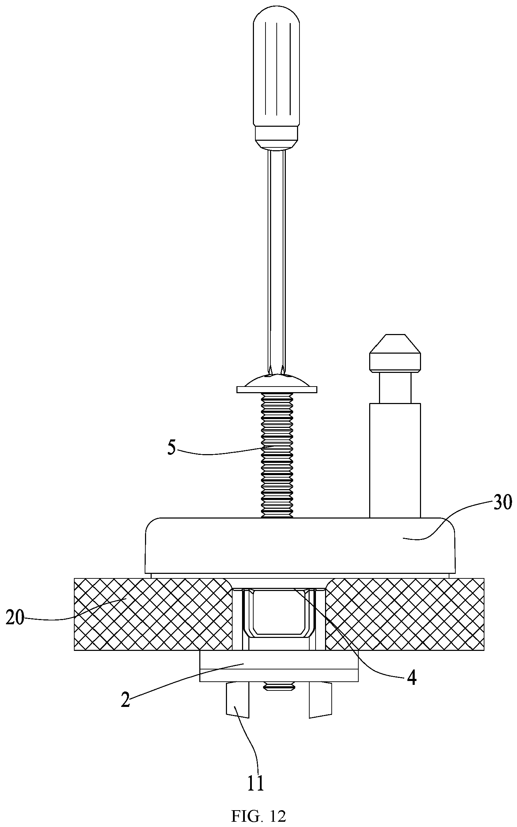

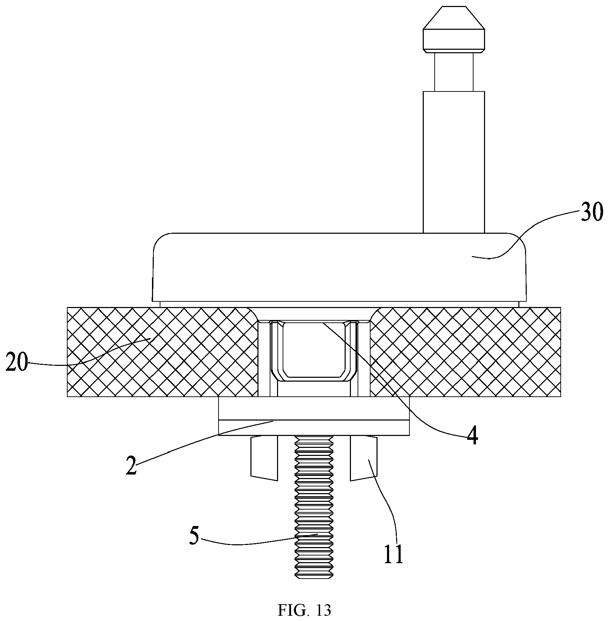

First, one end of the flexible connecting piece 1 passes through the fixing sheet 2 and the plug 4, making the fixing sheet 2 abut against the limiting block 11 of the flexible connecting piece 1. Second, as shown in FIG. 10, the fixing sheet 2 obliquely passes through the mounting hole 201 of the toilet body 20. Third, as shown in FIG. 11, the plug 4 is placed on the mounting hole 201 of the toilet body 20, followed by pulling the flexible connecting piece 1 to drive the fixing sheet 2 to tightly abut on the toilet body 20, and then cutting the flexible connecting piece 1 protruding beyond the toilet body 20. Fourth, as shown in FIG. 12 and FIG. 13, the support 30 is placed on the toilet body 20 and locked with a fastening screw. In this way, the support 30 is quickly fixed to the toilet body 20. Subsequently, as shown in FIG. 9, the cover plate 40 can be installed on the toilet body 20 through the support 30.

It should be noted that the flexible connecting piece 1 is a flexible object, that is, the flexible connecting piece 1 can be bent to allow the fixing sheet 2 to be in an inclined state, which is beneficial for the fixing sheet to pass through the mounting hole 201 of the toilet body 20. After the fixing sheet passes through the mounting hole 201, the fixing sheet 2 can be in a horizontal state, so that two ends of the fixing sheet 2 abut against the toilet body 20. While the limiting structure 3 assists the flexible connecting piece 1 to maintain in a tight state without sliding down.

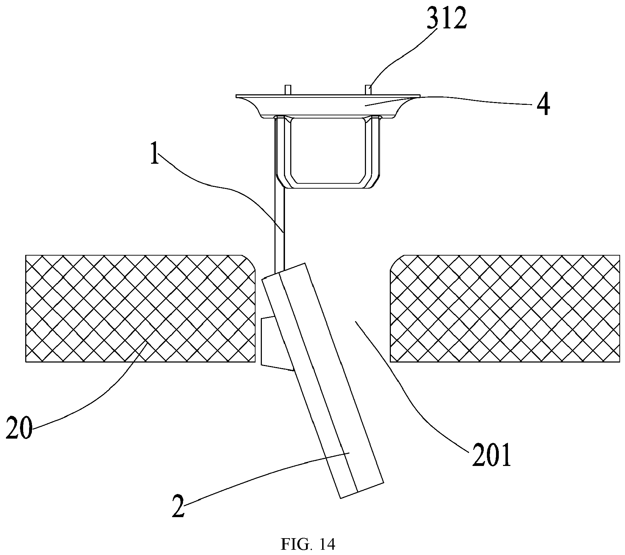

As shown in FIG. 14, when the support 30 needs to be removed, one of the pressing parts 312 is pressed to drive one of the limiting channels 32 to become wider, so that one of the flexible connecting pieces 1 is separated from the limiting channel 32, and the fixing sheet 2 can be in an inclined state. Subsequently, the fixing sheet 2 can be extracted out by pulling another flexible connecting piece 1, thus realizing repeated use and reducing cost.

In the description of the present invention, it should be understood that the orientations or positional relations indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise" and the like are based on those shown in the drawings, which is only for the convenience of describing the present invention and simplifying the description, and does not indicate or imply that the devices or elements referred to must have a specific orientation, or be constructed and operated in a specific orientation. Therefore, these terms cannot be understood as a limitation to the present invention.

In addition, the terms "first" and "second" are only for the purpose of description, and cannot be understood as indicating or implying relative importance or implicitly indicating the number of indicated technical features. Thus, features defined with "first" and "second" may explicitly or implicitly include one or more of these features. In the description of the present invention, "plurality" means two or more, unless otherwise specifically defined.

In the present invention, unless otherwise clearly specified and defined, the terms "installation", "connected", "connection", "fixing" and the like should be understood as a broad interpretation. For example, it can be a fixed connection, a detachable connection, or integrally formed; it can be a mechanical connection or an electrical connection; it can a direct connection or an indirect connection through an intermediate medium, and it can be an internal communication of two elements or an interaction relationship between two elements. For those of ordinary skill in the art, the specific meaning of the above-mentioned terms in the present invention can be understood according to specific circumstances.

In the present invention, unless otherwise clearly specified and defined, a first feature "above" or "below" a second feature may include a direct contact between the first and second features, or an indirect contact therebetween via another feature instead of the direct contact. Moreover, the first feature "above", "on an upper of" and "on a top of" the second feature may include the first feature being directly above and obliquely above the second feature, or simply mean that the horizontal height of the first feature is larger than that of the second feature. The first feature "below", "on a lower of" and "on a bottom of" the second feature may include the first feature being directly below and obliquely below the second feature, or simply mean that the horizontal height of the first feature is smaller than that of the second feature.

In the description of the present specification, the terms "one embodiment", "some embodiments", "examples", "specific examples", or "some examples", etc., mean specific features, structures, materials or characteristics described in conjunction with the embodiments or examples are included in at least one embodiment or example of the present invention. In the present specification, the exemplary expression of the above-mentioned terms should not be understood as necessarily referring to the same embodiment or example. Moreover, the specific features, structures, materials or characteristics described can be combined in any one or more embodiments or examples in a suitable manner. In addition, those skilled in the art can join and combine different embodiments or examples described in the present specification.

Although the embodiments of the present invention have been shown and described above, it can be understood that the above embodiments are exemplary and should not be construed as limiting the present invention. A person of ordinary skill in the art can make changes, modifications, substitutions, and variations to the above embodiments within the scope of the present invention.

## Claims

1. A locking assembly, comprising a flexible connecting piece and a fixing sheet; wherein one end of the flexible connecting piece is connected to the fixing sheet, the flexible connecting piece and the fixing sheet are linked, and the flexible connecting piece is provided with a limiting structure for preventing a movement of the fixing sheet.

2. The locking assembly according to claim 1, further comprising a plug; wherein the other end of the flexible connecting piece passes through the plug, and drives the fixing sheet to get close to the plug, and the plug or both the flexible connecting piece and the plug are provided with the limiting structure for preventing the fixing sheet from moving away from the plug.

3. The locking assembly according to claim 2, wherein a limiting bar is arranged on the plug, one end of the limiting bar is elastically connected to a side wall of the plug, and the limiting bar and another side wall of the plug form a limiting channel for the flexible connecting piece to be inserted; the limiting bar is provided with a plurality of first one-way teeth, and each of the first one-way teeth comprises a first sliding surface and a first abutting surface; the flexible connecting piece is provided with a plurality of second one-way teeth, each of the second one-way teeth comprises a second sliding surface and a second abutting surface, and the second sliding surface can slide along the first sliding surface, when the second sliding surface slides along the first sliding surface and arrives at an end portion of the first sliding surface, the second sliding surface generates a sudden jump, so that the second abutting surface abuts on the first abutting surface; the limiting structure is a combination of the first one-way teeth and the second one-way teeth.

4. The locking assembly according to claim 3, wherein the other end of the limiting bar protrudes out of the plug to form a pressing part, and the pressing part is pressed to change a width of the limiting channel.

5. The locking assembly according to claim 4, wherein a through hole is arranged on the fixing sheet; one end of the flexible connecting piece is provided with a limiting block, and the other end of the flexible connecting piece passes through the through hole on the fixing sheet, so that the limiting block abuts against the fixing sheet.

6. The locking assembly according to claim 5, wherein two or more flexible connecting pieces are provided.

7. The locking assembly according to claim 1, wherein the limiting structure is a limiting ball, and the limiting ball is arranged at an end of the flexible connecting piece away from the fixing sheet; or the limiting structure is a foldable metallic flexible connecting piece.

8. The locking assembly according to claim 2, wherein the limiting structure is an elastic sheet, one end of the elastic sheet is elastically connected to a side wall of the plug, the other end of the elastic sheet and another side wall of the plug form an opening for the flexible connecting piece to be inserted, and a width of the opening is less than a width of the flexible connecting piece.

9. The locking assembly according to any one of claims 1-8, further comprising a fastener, wherein the fastener is connected to the fixing sheet after passing through the plug.

10. A toilet, comprising the locking assembly according to any one of claims 1-9, a support, and a cover plate, wherein the support is installed on a toilet body by the locking assembly, and the cover plate is installed on the support.
